# DEMANDE DE BREVET EUROPEEN

(11) **EP 2 450 836 A2**
(43) Date de publication de la demande: **09.05.2012**
(21) Numéro de dépôt: 11380086.6
(22) Date de dépôt: 26.10.2011
(51) Int. Cl.: G06K 19/07

(54) **Système d'identification par radiofréquence**

(30) Priorité: 08.11.2010 ES 201031638 P
(71) Demandeur: Sumat Electrosistemas, S.L., 20305 Irun Guipuzcoa (ES)
(72) Inventeur: Mata Garrido, Luis, 20305 Irun (Gipuzkoa) (ES)
(74) Mandataire: Urizar Barandiaran, Miguel Angel

(57) **Abrégé**

Système d'identification par radiofréquence, se composant, au moins, d'un circuit électronique (1) avec un récepteur de radiofréquence (7); d'une cellule solaire (2) avec des accumulateurs (5); et d'une caissette (3) où tant le circuit (1) que son récepteur de radiofréquence (7) comme la cellule solaire (2) avec son accumulateur (5) sont disposés dans la caissette (3) qui dispose de moyens (4) pour le fixer directement ou indirectement au véhicule (V).

Le circuit électronique (1) se compose, au moins, d'un microcontrôleur (11) avec une touche (111) d'activation/désactivation; d'un interrupteur (112) de marche/arrêt; d'un indicateur d'état (113) et de connexions d'alimentation d'énergie propre et d'énergie et de données du récepteur de radiofréquence (7).

Une pile auxiliaire (6) est disposée en parallèle avec les accumulateurs (5), laquelle prendra le relais comme source d'alimentation si les accumulateurs (5) se déchargent complètement.

## Description

Dans l'état actuel de la technique, les identificateurs de radiofréquence RFID (sigles de Radio Frequency IDentification, en français identification par radiofréquence) sont connus, et, plus concrètement, les RFID à longue portée, utilisés principalement pour identifier des véhicules, en mouvement ou à l'arrêt, à des distances comprises entre 1 et 50 mètres (même si d'autres utilisations ne sont pas écartées).

Dans la technologie actuelle, il existe deux types d'identificateurs RFID à longue portée : les identificateurs actifs et les identificateurs passifs. Chacun d'eux présente des avantages et des inconvénients, comme nous l'exposons ci-dessous:
- Les RFID actifs ont comme source d'énergie une pile située dans l'identificateur même. Ceci les rend plus légers et de très longue portée (jusqu'à des dizaines de mètres), mais l'inconvénient est qu'il est nécessaire de changer la pile quand celle-ci est déchargée. Le prix du lecteur peut être modéré et les dimensions de celui-ci réduites.
- Les RFID passifs ont comme source d'énergie l'énergie induite par le lecteur, grâce à un couplage magnétique. Ceci leur donne une autonomie illimitée, mais une portée beaucoup plus réduite (uniquement quelques mètres). En outre, le lecteur consomme beaucoup d'énergie pour générer le champ magnétique, il est volumineux et son prix est élevé.

L'objet de l'invention s'insère dans ce secteur industriel. Il se rapporte à un système d'identification par radiofréquence se composant, au moins, d'un circuit électronique avec un récepteur de radiofréquence ; une cellule solaire avec des accumulateurs ; et une caissette disposant de moyens pour la fixer directement ou indirectement dans le véhicule.

Tant le circuit électronique avec son récepteur de radiofréquence que la cellule solaire avec ses accumulateurs sont disposés dans la caissette, laquelle dispose des moyens pour le fixer, directement ou indirectement, dans le véhicule.

À partir de cette conception de base, toutes les réalisations n'altérant, ne changeant ou ne modifiant pas les fondements essentiels proposés sont inclues dans l'objet de l'invention.

Le système d'identification par radiofréquence, conformément à l'invention, réunit en lui-même les avantages des deux types d'identificateurs connus, en éliminant leurs inconvénients car:
- Son autonomie est illimitée grâce au fait que la source principale d'énergie est solaire;
- Il est léger et à très longue portée (jusqu'à des dizaines de mètres);
- Le lecteur est du même type que ceux utilisés dans les modèles d'identificateurs actifs et peut être compatible avec eux, permettant ainsi de conjuguer les deux technologies.

Pour cette raison, le contenu de la présente demande constitue une invention nouvelle impliquant une activité inventive, et pouvant être appliquée dans le secteur industriel.

Pour mieux comprendre l'objet de la présente invention, une forme préférentielle de réalisation pratique, susceptible de changements accessoires ne dénaturant pas son fondement est représentée sur les plans.
La figure 1 représente le schéma général du système d'identification par radiofréquence objet de l'invention, avec ses composants de base et leur interconnexion.
La figure 2 représente une vue frontale - figure 2a- et une vue postérieure - figure 2b- de la caissette (3) du système d'identification par radiofréquence objet de l'invention, avec ses composants de base pour une réalisation incluant des moyens (4) pour une union directe sur le pare-brise du véhicule au moyen de bandes adhésives (41).
La figure 3 représente une vue générale schématique du système d'identification par radiofréquence objet de l'invention, avec ses composants de base, pour une réalisation incluant des moyens (4) pour une union indirecte au véhicule (v) au moyen d'un support (42).

Ci-dessous est décrit un exemple de réalisation pratique, non limitatif, de la présente invention. D'autres modes de réalisation, dans lesquels sont introduits des changements accessoires ne dénaturant pas le fondement ne sont absolument pas écartés ; au contraire, la présente invention comprend aussi toutes ses variantes.

Conformément à l'invention, le système d'identification par radiofréquence objet de l'invention inclut principalement, au moins:
- un circuit électronique (1) avec un récepteur de radiofréquence (7);
- une cellule solaire (2) avec des accumulateurs (5); et
- une caissette (3), disposant de moyens (4) pour la fixer directement ou indirectement au véhicule (V).

Tant le circuit (1) avec son récepteur de radiofréquence (7) que la cellule solaire (2) avec son accumulateur (5) sont disposés dans la caissette (3), laquelle dispose des moyens (4) pour le fixer, directement ou indirectement, au véhicule (v).

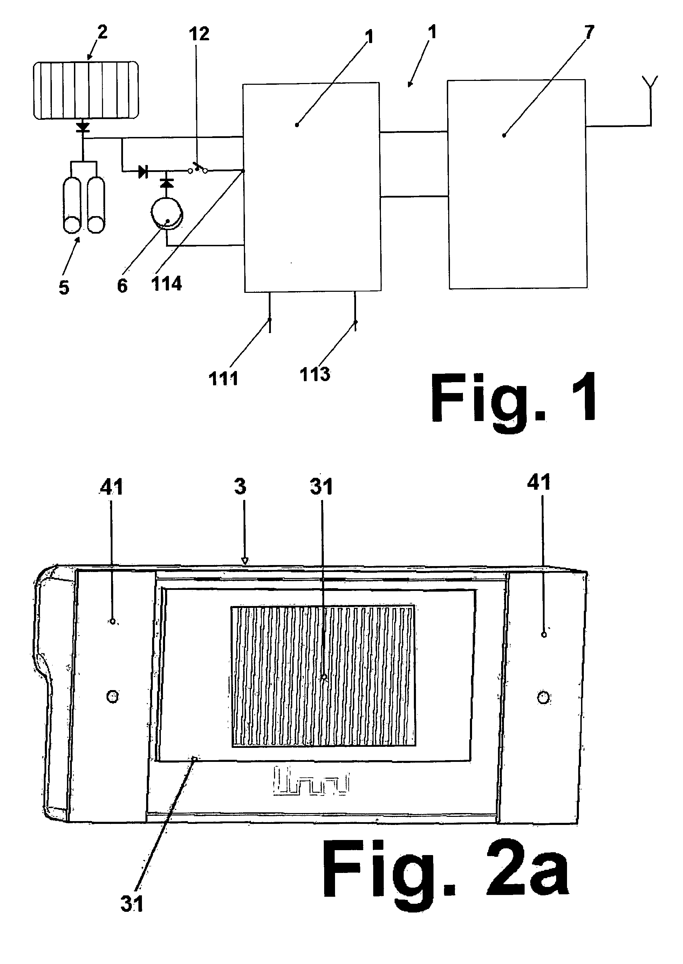

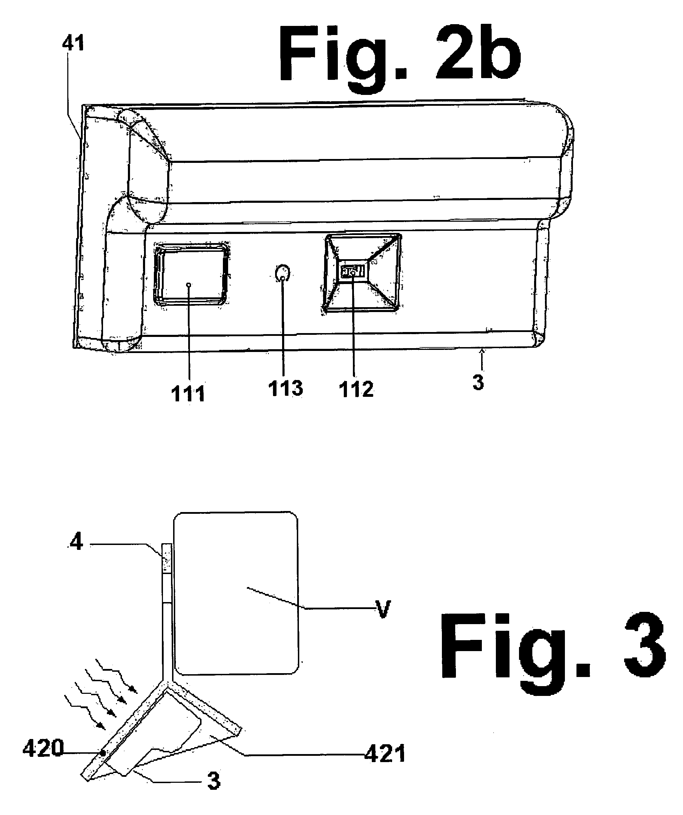

Concrètement, et aux effets de l'invention, les moyens (4) employés pour unir la caissette (3) au véhicule (V) sont indistincts, et il est possible d'utiliser, par exemple:
- des moyens d'union directe comme des bandes adhésives (41) escortant la cellule solaire (2) fixées par l'intérieur au pare-brise du véhicule (V), comme sur la réalisation représentée sur la figure 2a; ou
- des moyens d'union indirecte comme un support (42), fixé à son tour au véhicule (V) et pourvu de protections contre les intempéries (421) pour la caissette (3), comme sur la réalisation représentée sur la figure 3.

Dans tous les cas, le circuit électronique (1), en plus du dit récepteur de radiofréquence (7) et de la cellule solaire (2) avec des accumulateurs (5), dispose, au moins, de:
- un microcontrôleur (11) avec une touche (111) d'activation/désactivation ; un interrupteur (112) de marche/arrêt ; un indicateur d'état (113) et de connexions d'alimentation, tant d'énergie propre que d'énergie et de données du récepteur de radiofréquence (7);
- une pile auxiliaire (6) en parallèle avec les accumulateurs (5), que prend la relève comme source d'alimentation quand les accumulateurs (5) sont totalement déchargés.

L'assemblage de la cellule solaire (2) dans la caissette (3) a lieu dans une fenêtre arrière (31) prévue à ce propos et est effectué de sorte que la cellule (2) soit orientée de manière adéquate vers la lumière solaire. Sur cette même face, sont disposés les moyens (4) de fixation directe qui, dans le cas de la réalisation représentée, sont des bandes adhésives (41). Voir figure 2a.

Sur la face avant de la caissette (3), visible de l'intérieur du véhicule, sont disposés de manière à ce qu'ils soient directement accessibles la touche (111), l'indicateur lumineux (113) et l'interrupteur (112) de marche/arrêt général. Voir figure 2b.

Si une fixation indirecte est requise (une solution particulièrement applicable dans les véhicules ne disposant pas de pare-brises comme, par exemple, les palettiseurs, les machines pour les chantiers et autres), un support intermédiaire (42) est utilisé, lequel est fixé au véhicule (V) par des vis/tire-fonds, des adhésifs à double face, ou toute autre solution semblable. Sur ce support (42) est disposée la caissette (3) décrite ci-dessus en fixant les bandes adhésives (41) mentionnées précédemment contre une surface transparente (420) du support (42) qui la protège frontalement. La caissette (3) et tout son contenu sont aussi protégés latéralement au moyen de protecteurs contre les intempéries (421). Voir figure 3.

Les matériaux, les dimensions, les proportions et, en général, tous les autres détails accessoires ou secondaires n'altérant pas, ni ne changeant ou ne modifiant pas les principes fondamentaux proposés pourront varier.

Les termes dans lesquels est rédigé ce mémoire sont certains et reflètent fidèlement l'objet décrit, lequel doit être compris en son sens le plus vaste et jamais de manière limitative.

## Revendications

1. Système d'identification par radiofréquence, **caractérisé par le fait qu'**il dispose, au moins, d'un circuit électronique (1) avec un récepteur de radiofréquence (7) ; une cellule solaire (2) avec des accumulateurs (5) ; et une caissette (3) où tant le circuit (1) que son récepteur de radiofréquence (7) comme la cellule solaire (2) avec son accumulateur (5) sont disposés dans la caissette (3) qui dispose de moyens (4) pour le fixer directement ou indirectement au véhicule (V).

2. Système d'identification par radiofréquence, selon la revendication 1, **caractérisé par le fait que** les moyens (4) cités pour le fixer directement à la caissette (3) sont des bandes adhésives (41), qui escortent la cellule solaire (2) et qui sont fixées à l'intérieur du pare-brise du véhicule (V).

3. Système d'identification par radiofréquence, selon la revendication 1, **caractérisé par le fait que** les moyens (4) cités pour fixer indirectement la caissette (3) sont constitués par un support (42) fixé, de son côté, au véhicule (V) et pourvu de protections contre les intempéries (421) pour la caissette (3).

4. Système d'identification par radiofréquence, selon une des revendications précédentes, **caractérisé par le fait que** le circuit électronique (1) dispose, au moins, d'un microcontrôleur (11) avec une touche (111) d'activation/désactivation ; d'un interrupteur (112) de marche/arrêt ; d'un indicateur d'état (113) et de connexions d'alimentation tant d'énergie propre que d'énergie et des données du récepteur de radiofréquence (7).

5. Système d'identification par radiofréquence, selon une des revendications précédentes, **caractérisé par le fait qu'**une pile auxiliaire (6) est disposée en parallèle avec les accumulateurs (5), laquelle prend le relais comme source d'alimentation quand les accumulateurs (5) sont complètement déchargés.
